# EUROPEAN PATENT SPECIFICATION

(11) **EP 3 795 808 B1**
(45) Date of publication and mention of the grant of the patent: **30.08.2023**
(21) Application number: 20205484.7
(22) Date of filing: 26.07.2017
(51) Int. Cl.: F01K 23/10, F01K 23/16

(54) **STEAM AND GAS TURBINE DEVICE**
DAMPF- UND GASTURBINENVORRICHTUNG
DISPOSITIF DE TURBINE À GAZ ET À VAPEUR

(30) Priority: 28.07.2016 NL 2017247
(43) Date of publication of application: 24.03.2021
(62) Divisional of application: 17183223.1
(73) Proprietor: Heat Power B.V., 5702 KC HELMOND (NL)
(72) Inventor: OUWERKERK, Henk, 5702KC HELMOND (NL)
(74) Representative: Algemeen Octrooi- en Merkenbureau B.V.

(56) References cited:
- DE-A1-102010 033 659
- GB-A- 671 702
- JP-A- H0 874 517
- US-A1- 2005 204 723

## Description

The invention relates to a steam and gas turbine device as outlined in the introduction of Claim 1. Such steam and gas turbine device comprises, amongst others, at least a gas turbine unit (A) and a steam turbine unit (B), wherein the gas turbine unit (A) is partly composed of at least the following: a gas compressor positioned on a compressor axle, a combustion chamber and a gas turbine positioned on a gas turbine axle; and wherein the steam turbine unit (B) is partly composed of the following: a closed steam line in which at least the following are accommodated: a pump; a steam converter, which, in operation, is in heat-exchanging contact with the gases coming from the gas turbine; a steam turbine positioned on a steam turbine axle; as well as a condenser.

Steam and gas turbine devices are well known and are used industrially in all kinds of different configurations. An example of a steam and gas turbine device according to the abovementioned introduction is disclosed, for example, in Netherlands patent no. 1028373C1.

The abovementioned known variants of known steam and gas turbine devices are relatively complicated devices with a number of constructional drawbacks and limitations with regard to transferring the power generated to a load, as a result of which the overall efficiency of such installations is also limited.

A steam and gas turbine device according to the introduction of Claim 1 is disclosed, for example, in German patent publication no. DE102010033659, or British patent publication no. GB671702 or in Japanese patent publication no. JP-H-0874517.

The object of the present invention is to provide a steam and gas turbine device according to the abovementioned introduction which does not have the drawbacks associated with the multi-axle and single-axis variant. More particularly, it is an object of the invention to provide a steam and gas turbine device of simple construction and without all kinds of complicated additional components.

According to the invention, the steam and gas turbine device according to the invention is characterized by the fact that the device comprises an air pre-heater, which brings the gases coming from the gas turbine into heat-exchanging contact with the gases coming from the gas compressor. In this case as well, it is possible to achieve an improved efficiency of the device via heat transfer from the gases coming from the gas turbine (having a high temperature) to the gases coming from the gas compressor (having a lower temperature).

More particularly, the steam converter comprises a steam generator, which, in operation, is in heat-exchanging contact with the combustible flue gases coming from the combustion chamber (2).

With a further functional embodiment, the device furthermore comprises a further air pre-heater, which brings the steam line into heat-exchanging contact with the gases coming from the gas compressor. As a result thereof, the compressed gases coming from the gas compressor are pre-heated by the steam in the steam line, which significantly improves the efficiency of the heat exchanger and the gas turbine.

In this case, the further air pre-heater may be accommodated in the device downstream viewed from the steam generator and upstream viewed from the at least one heat exchanger. More specifically, the further air pre-heater is accommodated in the device downstream viewed from the steam turbine. This has the advantage that the steam in the steam line is first passed through the steam turbine at a high temperature, which improves the transfer of power to the steam turbine axle.

In a further embodiment as outlined in Claim 1, the air pre-heater is accommodated in the device upstream viewed from the at least one heat exchanger and, more specifically, the air pre-heater is accommodated in the device downstream viewed from the further air pre-heater.

Furthermore, the steam converter may comprise a steam superheater, which, in operation, is in heat-exchanging contact with the gases coming from the gas turbine. In this case, it is also possible to achieve a further heating of the steam in the steam line before passing this steam through the steam turbine. Also as a result thereof, the efficiency of the device is improved.

More specifically, the gas turbine is in flow connection with the combustion chamber in order to pass the gases coming from the gas turbine to the combustion chamber.

More particularly, the steam turbine and gas compressor are positioned on the same axle.

Furthermore, the gas turbine unit (A) comprises a blow-off valve which is arranged upstream of the at least one heat exchanger for blowing off the gases coming from the gas compressor in a controlled manner.

In this case, the blow-off valve may be accommodated in the gas turbine unit (A) downstream viewed from the further air pre-heater or in the gas turbine unit (A) upstream viewed from the air pre-heater or in the gas turbine unit (A) upstream viewed from the gas turbine.

Furthermore, the compressor may consist of several compressors situated parallel to each other and/or in series and the turbine may consist of several turbines situated parallel to each other and/or in series and the steam turbine may consist of several steam turbines situated parallel to each other and/or in series.

The efficiency of the steam turbine unit may furthermore be improved by the fact that, with a specific embodiment according to the invention, in operation, the water flowing through the steam line is in heat-exchanging contact with the air flowing through the intermediate cooler downstream of the condenser. More particularly, the heat-exchanging contact takes place according to the co-current principle or according to the countercurrent principle.

With other embodiments of the steam and gas turbine device according to the invention, the steam turbines may be impulse steam turbines or radial steam turbines, the gas compressors may be centrifugal gas compressors or axial gas compressors and the steam generator may be a once-through waste heat boiler.

The invention will now be explained with reference to a drawing, in which:

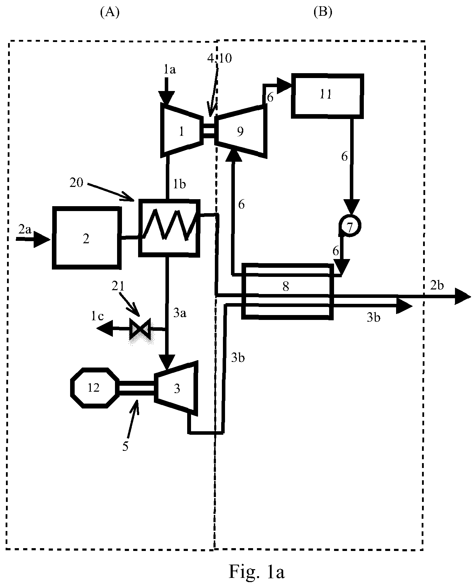

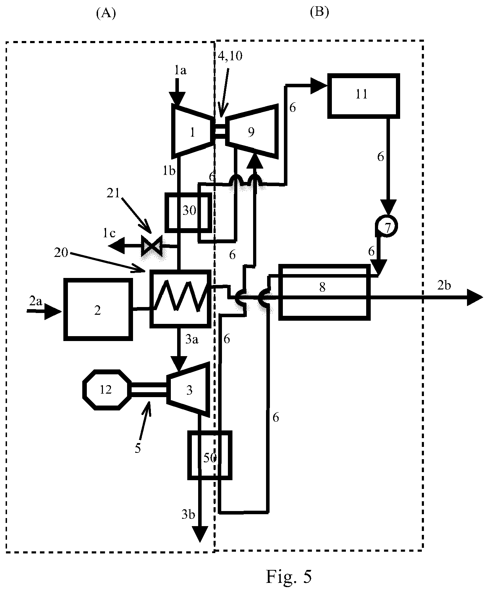

Figs. 1a-1b-2-3-4-5-6-7-8-9 successively show various embodiments of a steam and gas turbine device according to the invention.

In order to aid the understanding of the invention, similar components illustrated in the various figures will be denoted by the same reference numerals in the following description of the figures.

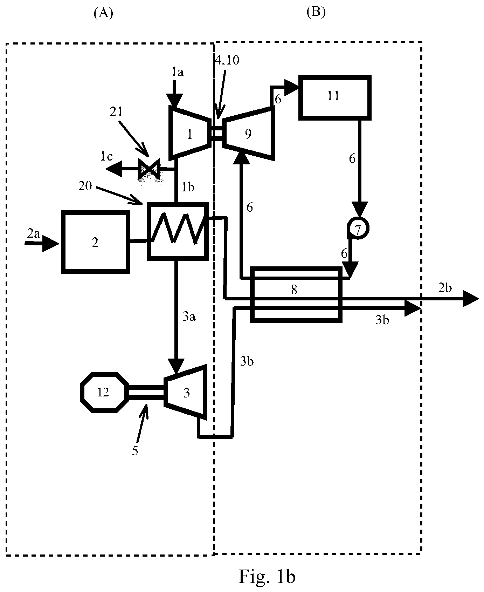

In the embodiments of a steam and gas turbine device according to the invention illustrated in Fig. 1a and 1b, the gas compressor 1 is shown as being positioned on one axle 4, 10, together with the steam turbine 9. By means of this configuration of a steam and gas turbine device according to the invention, the power generated by the steam turbine unit (B) is transferred to the gas turbine 3 via the axle 4, 10 and the gas compressor 1, so that all of the power generated by this device is transferred to one axle 5 in order to drive the load 12.

With all the embodiments of the steam and gas turbine device according to the invention described here, the steam turbines may be impulse steam turbines or radial steam turbines, the gas compressors may be centrifugal gas compressors or axial gas compressors and the steam generator may be a once-through waste heat boiler.

The characteristic feature of the steam and gas turbine device is the mechanical disengagement of the gas compressor 1 and the gas turbine 3 which are not positioned on the same axle, but are positioned on different axles 4 and 5, respectively. This mechanical disengagement of the gas compressor 1 and the gas turbine 3 renders the use of additional, complicated coupling mechanisms obsolete.

In this embodiment, reference numeral 2 denotes an arbitrary combustion chamber/oven which is fed with fuel which is supplied via the inlet 2a. Actually, the combustion chamber/oven 2 may be used for any factory process which has a hot (waste) stream as output. The combustion chamber 2 may be of any desired design and may be, for example, a combustion engine or an incinerator, depending on the technical installation which is used in the steam and gas device according to the invention.

Reference numeral 20 denotes a heat exchanger which brings the hot (waste) stream coming from the combustion chamber 2, such as combustible flue gases, into heat-exchanging contact with the gases coming from the gas compressor in compressed form via the outlet 1b.

Following the heat-exchanging contact between the combustible flue gases coming from the combustion chamber 2 and the compressed gases coming from the gas compressor 1, the latter gases are passed into the gas turbine 3 via the inlet 3a. The compressed gases which have been heated by the heat-exchanging contact in the heat exchanger 10 drive the gas turbine 3, as a result of which the latter will start to rotate, together with the gas turbine axle 5, and will thus drive a load, which is denoted by reference numeral 12 in the figure.

The heated gases leave the gas turbine 3 via the outlet 3b and are passed to the steam generator 8. Similarly, the combustible flue gases are passed from the heat exchanger 20 through the steam generator 8 via the outlet 2b.

In the steam generator 8, the hot gas turbine gases and the hot combustible flue gases are brought into heat-exchanging contact with the water flowing through the closed steam line 6, so that steam is generated, by means of which the steam turbine 9 is driven.

In this steam and gas turbine device, the gas compressor 1 is positioned on one axle 4, 10 together with the steam turbine 9. Using this configuration, the power generated by the steam turbine unit (B) is transferred to the gas turbine 3 via the axle 4, 10 and the gas compressor 1, so that all the power generated by this device is transferred to one axle 5 in order to drive the load 12.

By using the heat exchanger 20 in this embodiment of the steam and gas turbine device according to the invention, the entire unit can easily be coupled to installations which already contain a combustion unit. As a result thereof, the steam and gas turbine device requires few modifications as the heat exchanger 20 can easily be connected to the hot (waste) stream outlet of the combustion chamber 2 which is already present.

In the embodiment as illustrated in Figs. 1a and 1b, the steam converter comprises a steam generator 8 which, in operation, brings the steam/water line 6 into heat-exchanging contact with the combustible flue gases coming from the heat exchanger 20 via the outlet 2b and also with the gases coming from the gas turbine 3 via the outlet 3b.

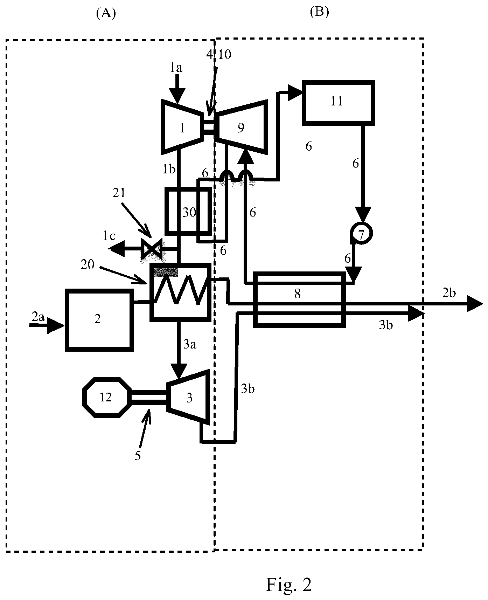

One other more efficient embodiment of the steam and gas turbine device is illustrated in Fig. 2, wherein the reference numeral 30 comprises a first air pre-heater which brings the steam line 6 through which the compressed gases coming from the gas compressor 1 pass into heat-exchanging contact with the outlet 1b. Here, the waste heat of the steam passed through the steam/water line 6 is emitted to the gases compressed by the gas compressor 1 and flowing through the outlet 1b, so that these gases are passed to the heat exchanger 20 in preheated and compressed form via the outlet 1b.

As is illustrated in Fig. 2, the first air pre-heater 30 is accommodated in the device downstream viewed from the steam generator 8 and upstream viewed from the heat exchanger 20. More specifically, as is illustrated in Fig. 2, the first air pre-heater 30 brings the outlet 1b of the gas compressor into heat-exchanging contact with the steam/water line 6 downstream viewed from the steam turbine 9.

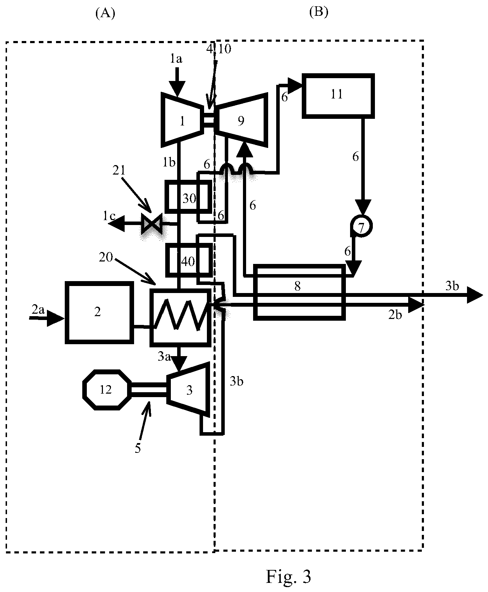

In Fig. 3, a particular form of the embodiment of the steam and gas turbine device according to the invention shown in Fig. 2 is illustrated. In this Fig. 3, reference numeral 40 denotes a second air pre-heater which brings the gases coming from the gas turbine 3 into heat-exchanging contact with the gases coming from the gas compressor 1 and more particularly the gases coming from the first air pre-heater 30. In this embodiment, the gases coming from the gas turbine 3 are passed to the steam converter/steam generator 8 (see outlet 3b) after they have passed through the second air pre-heater 40. An improved energy efficiency is achieved in this case as well in the form of heat recovery, due to the fact that the compressed gases which are released from the gas compressor 1 via the outlet 1b are preheated due to the transfer of energy from the gases from the gas turbine 3.

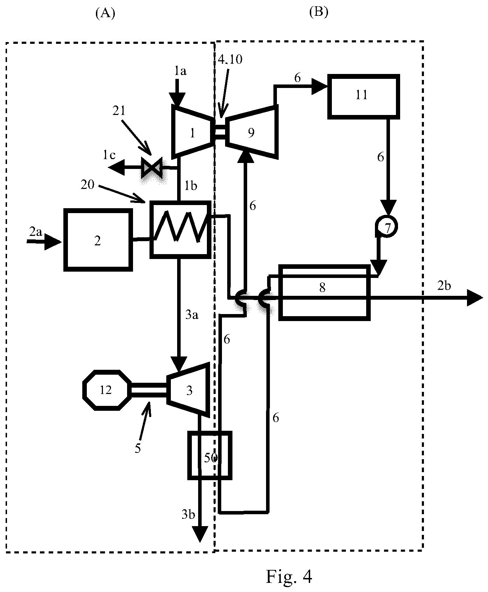

The embodiment in Fig. 4 is derived from the embodiment from Fig. 1, albeit that the steam converter also comprises a steam superheater 50 in addition to a steam generator 8, so that, in operation, the steam/water line 6 is in heat-exchanging contact with the gases coming from the gas turbine 3. In this embodiment, these gases are blown off via the outlet 3b.

In this way, a further heating of the steam passed through the steam/water line 6 and generated in the steam generator 8 is further heated in a supercritical manner in order to achieve a more efficient energy conversion in the steam turbine 9. Optionally, an additional water spray injector may be provided with this steam superheater 50 in order to introduce a water mist into the steam/water line 6, so that extra steam is generated which can be passed to the steam turbine 9.

A combination of the embodiments from Figs. 2 and 4 is illustrated in Fig. 5. In this combined embodiment, both a first air pre-heater 30 and a steam superheater 50 are implemented in which the gases coming from the gas turbine 3 are blown off via the outlet 3b. In this embodiment, the steam conversion in the steam generator 8 only takes place by heat transfer between the combustible flue gases (outlet 2b) coming from the combustion chamber 2 and the heat exchanger 20 and the water passed to the steam generator 8 via the pump 7.

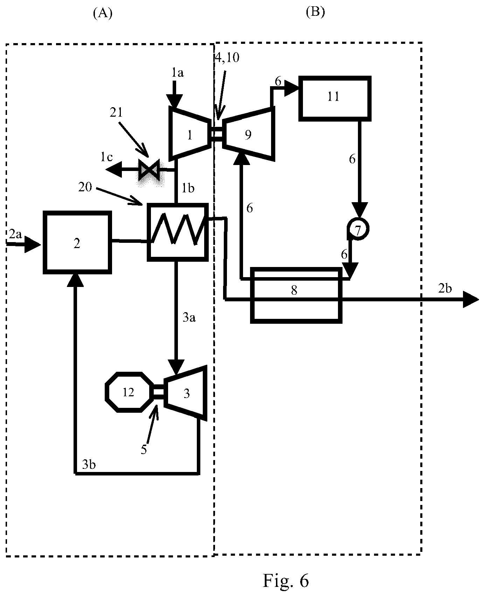

In Fig. 6, which refers back to the embodiment according to Fig. 1 in which the gases coming from the gas turbine 3 are not first passed to the steam converter 8, but are first passed to the combustion chamber 2, where they are fed to the combustion process. Thus, the gases fed to the combustion chamber 2 via the gas turbine 3 are also passed through the steam generator 8 as combustible flue gases via the outlet 2b. In this embodiment, the steam generator is thus only supplied with combustible flue gases via the outlet 2b which are composed of gases which are passed to the combustion chamber 2 via the inlet 2a or via the outlet 3b of the gas turbine 3.

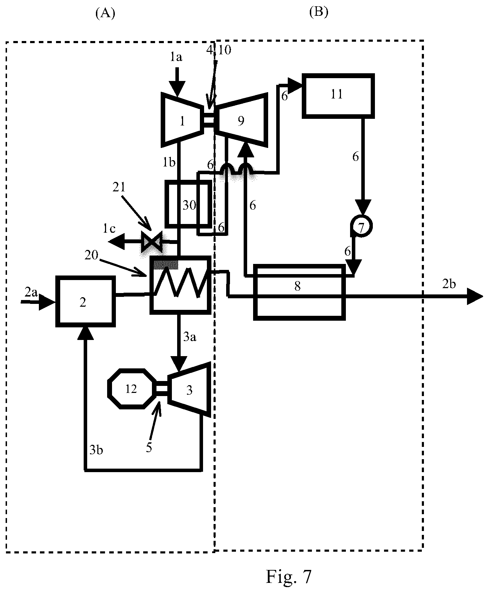

A combination of the embodiments from Figs. 2 and 6 is illustrated in Fig. 7. Also in this embodiment, the gases coming from the gas turbine 3 are passed to the combustion chamber 2 via the outlet 3b and the steam/water line 6 is in heat-exchanging contact with the outlet 1b downstream viewed from the steam turbine 9, through which the compressed gases coming from the gas compressor 1 are passed.

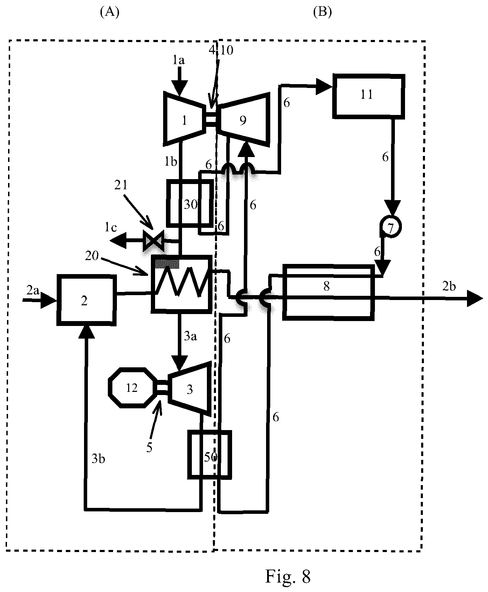

A combination of the embodiments from Figs. 2, 5 and 6 is illustrated in Fig. 8. In this embodiment, the steam superheater 50 is implemented which is in heat-exchanging contact with the gases coming from the gas turbine 3 which are passed into the combustion chamber 2 via the outlet 3b and of which only the combustible flue gases then come into heat-exchanging contact with the steam/water line 6 in the steam generator 8. After heating in the steam superheater 50 and after the steam turbine 9, the steam passed from the steam generator 8 to the steam superheater 50 is, in the first air pre-heater 30, again brought into heat-exchanging contact with the compressed gases which leave the gas compressor 1 via the outlet 1b.

Thus, a last waste heat which is still present in the steam is efficiently transferred to the compressed gases before being passed through the heat exchanger 20.

It will be clear that, with the illustrated embodiments of the steam and gas turbine device according to the invention, by the implementation of the heat exchanger 20, the entire device can easily be used with any installation where a hot (waste) stream is generated in an external combustion process or any other process.

It should furthermore be noted that the heat-exchanging contact in the first and second air pre-heaters 30 and 40, respectively, between the compressed gases from the gas compressor 1 and the steam in the steam/water line 6, or in the steam generator 8 and the steam superheater 50, respectively, between the steam in the steam/water line 6 and the gases coming from the gas turbine 3 / the combustible flue gases coming from the heat exchanger 20 can take place according to the co-current principle or according to the countercurrent principle.

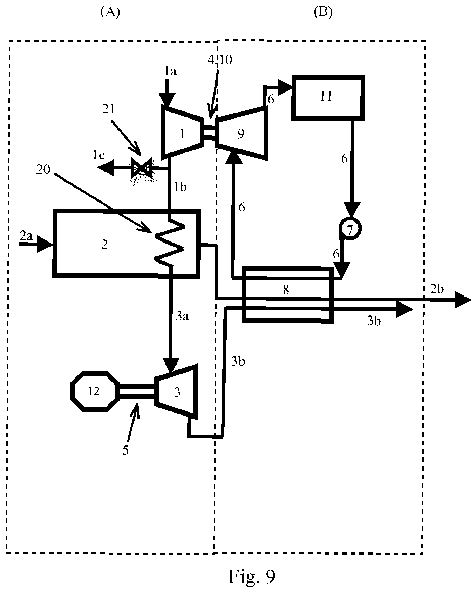

In the figures, reference numeral 21 denotes a blow-off valve which, is arranged in any case in all embodiments upstream of the gas turbine 3 (see all figures and in particular Fig. 1a) and preferably upstream of the at least one heat exchanger 20 (see all figures and in particular Figs. 1b and 9) and serves for blowing off gases coming from the gas compressor 1 via the outlet 1c. Preferably, the blow-off valve 21 is accommodated in the gas turbine unit (A) downstream viewed from the first air pre-heater 30 (Figs. 2, 3, 5, 7, 8), whereas the blow-off valve 21 is accommodated in the gas turbine unit (A) upstream viewed from the second air pre-heater 40, as is illustrated in Fig. 3. Optionally, the device may comprise a blow-off valve 21 which is arranged upstream of the gas turbine 3 in order to blow off the gases coming from the gas compressor 1.

In addition to the various variants of a steam and gas turbine device according to the invention illustrated in the Figs. 1a-1b-2-3-4-5-6-7-8-9 the illustrated variants may be supplemented with an additional advantageous aspect, in which the blow-off valve 21 and the outlet 1c are in flow connection with the combustion chamber 2. With this embodiment, which can be applied to each Fig. 1 to 9, the blow-off valve 21 is returned to the combustion chamber 2 via the outlet 1c. Thus, the gases coming from the gas compressor 1 and which are usually blown off via the blow-off valve 21 and the outlet 1c, are now returned to the combustion chamber 2. These additional embodiments provide an additional more efficient combustion and thus energy conversion in the combustion chamber 2 and ultimately also in the heat exchanger 20.

In addition, Fig. 9 shows an embodiment in which the combustion chamber 2 and the heat exchanger 20 have been integrated with each other such that they form a single entity, resulting in a more efficient energy conversion. The integration of the combustion chamber 2 and the heat exchanger 20 with each other to form a single entity may also be used in the other embodiments which are illustrated in Figs. 1a-1b-2-3-4-5-6-7-8.

## Claims

1. Steam and gas turbine device comprising a gas turbine unit (A) and a steam turbine unit (B), wherein the gas turbine unit (A) is partly composed of at least the following:
- a gas compressor (1) positioned on a compressor axle (4), a combustion chamber (2) and a gas turbine (3) positioned on a gas turbine axle (5); and
wherein the steam turbine unit (B) is partly composed of the following:
- a closed steam line (6) in which at least the following are accommodated:
- a pump (7); a steam converter (8; 50), which, in operation, is in heat-exchanging contact with the gases (3b) coming from the gas turbine (3); a steam turbine (9) positioned on a steam turbine axle (10); as well as a condenser (11) and wherein, in operation, the steam turbine (9) drives the gas compressor (1) of the gas turbine unit (A), wherein the gas turbine unit (A) furthermore comprises at least one heat exchanger (20) which brings the combustible flue gases coming from the combustion chamber (2) into heat-exchanging contact with the gases coming from the gas compressor (1), **characterized in that** the gas turbine unit (A) comprises a blow-off valve (21) which is arranged upstream of the gas turbine (3) for blowing off the gases coming from the gas compressor (1), and wherein the device furthermore comprises an air pre-heater (40) which brings the gases coming from the gas turbine (3) into heat-exchanging contact with the gases coming from the gas compressor (1).

2. Steam and gas turbine device according to Claim 1, **characterized in that** the blow-off valve (21) is arranged upstream of the at least one heat exchanger (20).

3. Steam and gas turbine device according to Claim 1 or 2, **characterized in that** the steam converter (8; 50) comprises a steam generator (8), which, in operation, is in heat-exchanging contact with the combustible flue gases coming from the combustion chamber (2).

4. Steam and gas turbine device according to one or more of the preceding claims, **characterized in that** the device furthermore comprises a further air pre-heater (30), which brings the steam line (6) into heat-exchanging contact with the gases coming from the gas compressor (1).

5. Steam and gas turbine device according to Claim 4, **characterized in that** the further air pre-heater (30) is accommodated in the device downstream viewed from the steam generator (8) and upstream viewed from the at least one heat exchanger (20).

6. Steam and gas turbine device according to Claim 5, **characterized in that** the blow-off valve (21) is accommodated in the gas turbine unit (A) downstream viewed from the further air pre-heater (30).

7. Steam and gas turbine device according to Claim 4 or 5, **characterized in that** the further air pre-heater (30) is accommodated in the device downstream viewed from the steam turbine (9).

8. Steam and gas turbine device according to Claim 6, **characterized in that** the blow-off valve (21) is accommodated in the gas turbine unit (A) upstream viewed from the air pre-heater (40).

9. Steam and gas turbine device according to Claim 1, **characterized in that** the air pre-heater (40) is accommodated in the device upstream viewed from the at least one heat exchanger (20).

10. Steam and gas turbine device according to Claim 9, **characterized in that** the air pre-heater (40) is accommodated in the device downstream viewed from the further air pre-heater (30).

11. Steam and gas turbine device according to one or more of the preceding claims, **characterized in that** the steam converter (8; 50) comprises a steam superheater (50), which, in operation, is in heat-exchanging contact with the gases (3b) coming from the gas turbine (3).

12. Steam and gas turbine device according to one or more of the preceding claims, **characterized in that** the gas turbine (3) is in flow connection with the combustion chamber (2) in order to pass the gases (3b) coming from the gas turbine to the combustion chamber (2).

13. Steam and gas turbine device according to one or more of the preceding claims, **characterized in that** the gas compressor (1) and the steam turbine (9) are positioned on the same axle (4, 10).

14. Steam and gas turbine device according to one or more of the preceding claims, **characterized in that** the blow-off valve (21) is connected to the combustion chamber (2).

## Patentansprüche

1. Dampf- und Gasturbinenvorrichtung, die eine Gasturbineneinheit (A) und eine Dampfturbineneinheit (B) umfasst, wobei die Gasturbineneinheit (A) zum Teil durch mindestens eines der Folgenden gebildet wird:
- einen Gasverdichter (1), der auf einer Verdichterachse (4) positioniert ist, eine Brennkammer (2) und eine Gasturbine (3), die auf einer Gasturbinenachse (5) positioniert ist; und
wobei die Dampfturbineneinheit (B) zum Teil durch die Folgenden gebildet wird:
- eine geschlossene Dampfleitung (6), in der mindestens die Folgenden aufgenommen sind:
- eine Pumpe (7); einen Dampfumformer (8; 50), der im Betrieb in Wärmetauschkontakt mit den Gasen (3b), die von der Gasturbine (3) kommen, ist; eine Dampfturbine (9), die auf einer Dampfturbinenachse (10) positioniert ist; sowie einen Kondensator (11) und wobei die Dampfturbine (9) im Betrieb den Gasverdichter (1) der Gasturbineneinheit (A) antreibt, wobei die Gasturbineneinheit (A) des Weiteren mindestens einen Wärmetauscher (20) umfasst, der die aus der Brennkammer (2) kommenden brennbaren Rauchgase in Wärmetauschkontakt mit den aus dem Gasverdichter (1) kommenden Gasen bringt,
**dadurch gekennzeichnet, dass** die Gasturbineneinheit (A) ein Abblaseventil (21) umfasst, das stromaufwärts der Gasturbine (3) zum Abblasen der aus dem Gasverdichter (1) kommenden Gase angeordnet ist, und wobei die Vorrichtung des Weiteren einen Luftvorwärmer (40) umfasst, der die aus der Gasturbine (3) kommenden Gase in Wärmetauschkontakt mit den aus dem Gasverdichter (1) kommenden Gasen bringt.

2. Dampf- und Gasturbinenvorrichtung nach Anspruch 1, **dadurch gekennzeichnet, dass** das Abblaseventil (21) stromaufwärts des mindestens einen Wärmetauschers (20) angeordnet ist.

3. Dampf- und Gasturbinenvorrichtung nach Anspruch 1 oder 2, **dadurch gekennzeichnet, dass** der Dampfumformer (8; 50) einen Dampfgenerator (8) umfasst, der im Betrieb in Wärmetauschkontakt mit den aus der Brennkammer (2) kommenden brennbaren Rauchgasen steht.

4. Dampf- und Gasturbinenvorrichtung nach einem der vorhergehenden Ansprüche, **dadurch gekennzeichnet, dass** die Vorrichtung des Weiteren einen weiteren Luftvorwärmer (30) umfasst, der die Dampfleitung (6) in Wärmetauschkontakt mit den aus dem Gasverdichter (1) kommenden Gasen bringt.

5. Dampf- und Gasturbinenvorrichtung nach Anspruch 4, **dadurch gekennzeichnet, dass** der weitere Luftvorwärmer (30) in der Vorrichtung stromabwärts bei Betrachtung von dem Dampfgenerator (8) aus und stromaufwärts bei Betrachtung von dem mindestens einen Wärmetauscher (20) aus aufgenommen ist.

6. Dampf- und Gasturbinenvorrichtung nach Anspruch 5, **dadurch gekennzeichnet, dass** das Abblaseventil (21) in der Gasturbineneinheit (A) stromabwärts bei Betrachtung von dem weiteren Luftvorwärmer (30) aus aufgenommen ist.

7. Dampf- und Gasturbinenvorrichtung nach Anspruch 4 oder 5, wobei der weitere Luftvorwärmer (30) in der Vorrichtung stromabwärts bei Betrachtung von der Dampfturbine (9) aus aufgenommen ist.

8. Dampf- und Gasturbinenvorrichtung nach Anspruch 6, **dadurch gekennzeichnet, dass** das Abblaseventil (21) in der Gasturbineneinheit (A) stromaufwärts bei Betrachtung von dem Luftvorwärmer (40) aus aufgenommen ist.

9. Dampf- und Gasturbinenvorrichtung nach Anspruch 1, **dadurch gekennzeichnet, dass** der Luftvorwärmer (40) in der Vorrichtung stromaufwärts bei Betrachtung von dem mindestens einen Wärmetauscher (20) aus aufgenommen ist.

10. Dampf- und Gasturbinenvorrichtung nach Anspruch 9, **dadurch gekennzeichnet, dass** der Luftvorwärmer (40) in der Vorrichtung stromabwärts bei Betrachtung von dem weiteren Luftvorwärmer (30) aus aufgenommen ist.

11. Dampf- und Gasturbinenvorrichtung nach einem der vorhergehenden Ansprüche, **dadurch gekennzeichnet, dass** der Dampfumformer (8; 50) einen Dampfüberhitzer (50) umfasst, der im Betrieb mit den aus der Gasturbine (3) kommenden Gasen (3b) in Wärmetauschkontakt steht.

12. Dampf- und Gasturbinenvorrichtung nach einem oder mehreren der vorhergehenden Ansprüche, **dadurch gekennzeichnet, dass** die Gasturbine (3) dahingehend in Strömungsverbindung mit der Brennkammer (2) steht, die aus der Gasturbine kommenden Gase (3b) zur Brennkammer (2) zu leiten.

13. Dampf- und Gasturbinenvorrichtung nach einem oder mehreren der vorhergehenden Ansprüche, **dadurch gekennzeichnet, dass** der Gasverdichter (1) und die Dampfturbine (9) auf derselben Achse (4, 10) positioniert sind.

14. Dampf- und Gasturbinenvorrichtung nach einem oder mehreren der vorhergehenden Ansprüche, **dadurch gekennzeichnet, dass** das Abblaseventil (21) mit der Brennkammer (2) verbunden ist.

## Revendications

1. Dispositif de turbine à vapeur et à gaz comprenant une unité de turbine à gaz (A) et une unité de turbine à vapeur (B), où l'unité de turbine à gaz (A) est en partie composée d'au moins ce qui suit :
- un compresseur de gaz (1) positionné sur un axe de compresseur (4), une chambre de combustion (2) et une turbine à gaz (3) positionnée sur un axe de turbine à gaz (5) ; et
dans lequel l'unité de turbine à vapeur (B) est en partie composée de ce qui suit :
- une conduite de vapeur fermée (6) dans laquelle sont reçus au moins ce qui suit :
- une pompe (7) ; un convertisseur de vapeur (8 ; 50) qui, lors du fonctionnement, est en contact d'échange de chaleur avec les gaz (3b) provenant de la turbine à gaz (3) ; une turbine à vapeur (9) positionnée sur un axe de turbine à vapeur (10) ; ainsi qu'un condenseur (11) et où, lors du fonctionnement, la turbine à vapeur (9) entraîne le compresseur de gaz (1) de l'unité de turbine à gaz (A), où l'unité de turbine à gaz (A) comprend en outre au moins un échangeur de chaleur (20) qui amène les gaz de fumée combustibles provenant de la chambre de combustion (2) en contact d'échange de chaleur avec les gaz provenant du compresseur de gaz (1), **caractérisé en ce que**
l'unité de turbine à gaz (A) comprend une soupape de décharge (21) qui est agencée en amont de la turbine à gaz (3) pour décharger les gaz provenant du compresseur de gaz (1),
et dans lequel
le dispositif comprend en outre un préchauffeur d'air (40) qui amène les gaz provenant de la turbine à gaz (3) en contact d'échange de chaleur avec les gaz provenant du compresseur de gaz (1).

2. Dispositif de turbine à vapeur et à gaz selon la revendication 1, **caractérisé en ce que** la soupape de décharge (21) est agencée en amont de l'au moins un échangeur de chaleur (20).

3. Dispositif de turbine à vapeur et à gaz selon la revendication 1 ou 2, **caractérisé en ce que** le convertisseur de vapeur (8 ; 50) comprend un générateur de vapeur (8) qui, lors du fonctionnement, est en contact d'échange de chaleur avec les gaz de fumée combustibles provenant de la chambre de combustion (2).

4. Dispositif de turbine à vapeur et à gaz selon une ou plusieurs des revendications précédentes, **caractérisé en ce que** le dispositif comprend en outre un autre préchauffeur d'air (30), qui amène la conduite de vapeur (6) en contact d'échange de chaleur avec les gaz provenant du compresseur de gaz (1).

5. Dispositif de turbine à vapeur et à gaz selon la revendication 4, **caractérisé en ce que** l'autre préchauffeur d'air (30) est reçu dans le dispositif en aval tel que vu depuis le générateur de vapeur (8) et en amont tel que vu depuis l'au moins un échangeur de chaleur (20).

6. Dispositif de turbine à vapeur et à gaz selon la revendication 5, **caractérisé en ce que** la soupape de décharge (21) est reçue dans l'unité de turbine à gaz (A) en aval telle que vue depuis l'autre préchauffeur d'air (30).

7. Dispositif de turbine à vapeur et à gaz selon la revendication 4 ou 5, **caractérisé en ce que** l'autre préchauffeur d'air (30) est reçu dans le dispositif en aval tel que vu depuis la turbine à vapeur (9).

8. Dispositif de turbine à vapeur et à gaz selon la revendication 6, **caractérisé en ce que** la soupape de décharge (21) est reçue dans l'unité de turbine à gaz (A) en amont telle que vue depuis le préchauffeur d'air (40).

9. Dispositif de turbine à vapeur et à gaz selon la revendication 1, **caractérisé en ce que** le préchauffeur d'air (40) est reçu dans le dispositif en amont tel que vu depuis l'au moins un échangeur de chaleur (20).

10. Dispositif de turbine à vapeur et à gaz selon la revendication 9, **caractérisé en ce que** le préchauffeur d'air (40) est reçu dans le dispositif en aval tel que vu depuis l'autre préchauffeur d'air (30).

11. Dispositif de turbine à vapeur et à gaz selon une ou plusieurs des revendications précédentes, **caractérisé en ce que** le convertisseur de vapeur (8 ; 50) comprend un surchauffeur de vapeur (50) qui, lors du fonctionnement, est en contact d'échange de chaleur avec les gaz (3b) provenant de la turbine à gaz (3).

12. Dispositif de turbine à vapeur et à gaz selon une ou plusieurs des revendications précédentes, **caractérisé en ce que** la turbine à gaz (3) est en communication fluidique avec la chambre de combustion (2) afin de faire passer les gaz (3b) provenant de la turbine à gaz à la chambre de combustion (2).

13. Dispositif de turbine à vapeur et à gaz selon une ou plusieurs des revendications précédentes, **caractérisé en ce que** le compresseur de gaz (1) et la turbine à vapeur (9) sont positionnés sur le même axe (4, 10).

14. Dispositif de turbine à vapeur et à gaz selon une ou plusieurs des revendications précédentes, **caractérisé en ce que** la soupape de décharge (21) est reliée à la chambre de combustion (2).
